# EUROPÄISCHE PATENTSCHRIFT

(11) **EP 0 584 752 B1**
(45) Veröffentlichungstag und Bekanntmachung des Hinweises auf die Patenterteilung: **14.03.2001**
(21) Anmeldenummer: 93113392.0
(22) Anmeldetag: 21.08.1993
(51) Int. Cl.: H04N 13/00

(54) **Verfahren zur Erzeugung stereoskopischer Darstellungen**
Method for generating a stereoscopic image representation
Procédé pour la représentation d'images stéréoscopiques

(30) Priorität: 25.08.1992 DE 4228111
(43) Veröffentlichungstag der Anmeldung: 02.03.1994
(73) Patentinhaber: ICE OELSNITZ GmbH, 08606 Oelsnitz (DE)
(72) Erfinder: Sombrowsky, Reiner, D-08527 Plauen (DE)
(74) Vertreter: Rohrschneider, Gottfried

(56) Entgegenhaltungen:
- EP-A- 0 335 282
- US-A- 3 932 699
- IEEE 1991 NATIONAL AEROSPACE AND ELECTRONICS CONFERENCE NAECON 1991, Bd.2, 20. Mai 1991, DAYTON Seiten 914 - 920, XP312611 R.E. HOLMES '3-D TV without glasses'
- PATENT ABSTRACTS OF JAPAN vol. 13, no. 126 (E-734) 28. März 1989 & JP-A-63 294 090 (TOSHIBA CORP) 30. November 1988

## Beschreibung

Die Erfindung betrifft ein Verfahren und eine Vorrichtung zur Erzeugung von stereoskopischen Darstellungen ohne Verwendung von zusätzlichen Sehhilfen, wobei die Betrachtung in weiten Grenzen, sowohl bezüglich des Winkels, als auch der Entfernung, möglich ist. Das erfindungsgemäße Verfahren wird zur Wiedergabe als auch zur Aufnahme von stereoskopischen Darstellungen angewandt.

Bisher wurden bereits verschiedene Verfahren und Vorrichtungen zur Erzeugung von stereoskopischen Darstellungen gefunden. Diesen haftet jedoch der Nachteil an, daß sie fast ausnahmslos an Hilfsmittel, wie zum Beispiel zusätzliche Sehhilfen gebunden sind, oder sich mechanisch bewegender Teile bedienen. In dem Patent EP 0470801 wird eine Vorrichtung beschrieben, bei der eine schnell rotierende Spezialscheibe durch einen besonders abgelenkten Lichtstrahl in der Weise angestrahlt wird, daß im Bewegungsbereich der Scheibe ein räumliches Bild entsteht. Wegen der mechanisch zu bewegenden Teile und der im Zusammenhang stehenden Massenträgheit entstehen jedoch große Probleme, da keine uneingeschränkt schnelle Bewegung möglich ist.
Das Patent DE 3921061 hat eine Wiedergabeeinrichtung für stereoskopische Wahrnehmung von Bildern zum Inhalt, bei der durch eine besonders gestaltete Zylinderlinsen-Rasterplatte und einem sich dahinter befindlichen flachen Bildschirm ein stereoskopisches Bild erzeugt wird. Der Abstand der Zylinderlinsen-Rasterplatte vom Bildschirm und deren Horizontallage kann entsprechend der Betrachterposition verändert werden. Dieser Wiedergabeeinrichtung haftet der Nachteil an, daß ein derartiges stereoskopisches Bild nur optimal für eine Betrachterposition eingestellt werden kann. Bei Vorhandensein mehrerer Betrachter auf unterschiedlichen Betrachterpositionen ist diese Einrichtung ungeeignet.
In der Veröffentlichung vom 20.05.91 von R.E. Holmes "3D without glasses" Band 2, Seiten 914 - 920 der IEEE 1991 NATIONAL AEROSPACE AND ELECTRONICS CONFERENCE NAECON 19991 wird ein Verfahren zur Erzeugung von stereoskopischen Darstellungen beschrieben, bei dem hinter bewegten Schlitzen durch eine geeignete Ablenkschaltung auf einer geeigneten Bildröhre jeweils diskrete Bildspalten entspechenden Inhaltes einzeln oder in Gruppen dargestellt werden, wobei ein entsprechender Platz zwischen den einzelnen und den gruppierten Spalten notwendig ist. Diesem Verfahren haftet der Nachteil an, daß zum einen durch den notwendigen Zwischenabstand der bildwiedergebenden Spalten keine homogene autostereoskopische Darstellung mit fließenden Perspektivwechseln gegeben ist und außerdem kein vertikaler autosteroskopischer 3D-Eindruck vorhanden ist, was zur Verfälschung von Proportionen führt.

Der Erfindung die Aufgabe zugrunde, ein Verfahren ohne Verwendung mechanisch bewegter Teile zu schaffen, mit dem es möglich ist, stereoskopische Darstellungen ohne Verwendung zusätzlicher Sehhilfen, wie Polarisationsbrillen oder dergleichen zu erzeugen, die in einem großen Betrachterpositionsbereich ohne Perspektivsprünge wahrgenommen werden können. Zudem soll die Aufnahme einer stereoskopischen Kulisse ermöglicht werden und ein stereoskopisches Wiedergabesystem soll sich ohne mechanische Änderung als zweidimensionales Wiedergabesystem verwenden lassen.

Die Aufgabe der Erfindung wird gelöst, durch die im kennzeichnenden Teil des Anspruchs 1 aufgezeigten technischen Merkmale.
Das erfindungsgemäße Verfahren besteht darin, in allen Koordinatenpunkten einer undurchsichtigen ebenen Betrachtungswand vorzugsweise mehrere hinreichend kleine durchsichtige Öffnungen sequentiell zu erzeugen und zu jeder Position einer solchen Öffnung in einem genau definierten Abstand **D** hinter dieser Öffnung jeweils ein zweidimensionales in sich keine Lücken aufweisendes Teilbild **3** in der Weise bereitzustellen, daß ein Betrachter in einem großen Standortbereich aufgrund der Geschwindigkeit des Vorganges und der Trägheit des Auges ein vollständiges räumliches Bild wahrnimmt. Dieses wird dadurch erreicht, daß ein entsprechendes Teilbild **3** hinter einer Öffnungsposition die zweidimensionale Projektion einer räumlichen Kulisse aus der Perspektive der Öffnungsposition ist und ein Betrachter von einem entsprechenden Standort mit jedem Auge nur ein winziges Detail eines derartigen Teilbildes **3** durch die entsprechende Öffnung erkennt. Eine vollständige räumliche Wahrnehmung kommt dann zustande, wenn als Öffnungen Löcher **4** zur Anwendung kommen und die Teilbilder hinter diesen Löchern eine entsprechende Höhenausdehnung **H** und Breitenausdehnung **B** entsprechend des maximal möglichen Betrachtungswinkels **W** besitzen. Aufgrund der Tatsache, daß ein Betrachter im allgemeinen nur einen horizontalen Stereoeindruck wahrnehmen kann, da sich beide Augen auf einer Höhe befinden, kann die Höhenausdehnung **H** wesentlich geringer als die Breitenausdehnung **B** des Teilbildes **3** sein.
Technisch wird das realisiert, indem als Betrachtungswand vorzugsweise eine dünne Spezialglasscheibe **1** zum Einsatz kommt, in der schnell umschaltbare Flüssigkristallelemente in der Weise angebracht sind, daß durch elektronische Ansteuerung Öffnungen in Form von Löchern **4** erzeugt werden, die sich horizontal und vertikal über die gesamte Spezialglasscheibe in einer hinreichend großen Geschwindigkeit bewegen, die groß genug ist, um beim Betrachten aufgrund der Trägheit des Auges einen kontinuierlichen Eindruck entstehen zu lassen. In einem genau definierten Abstand **D** zur Spezialglasscheibe wird ein Spezialmonitor angebracht, der im Gegensatz zu anderen Monitoren einen veränderten Zeilenlauf besitzt. Während einer geringen Verweilzeit eines Loches **4** erzeugt der Monitor ein vollständiges, zur aktuellen Lochposition gehörendes Teilbild **3** mit einer entsprechenden Breite **B** und einer Höhe **H**, wobei ein Zeilenlauf nur in den Grenzen eines Teilbildes **3** oder einer ganzen Spalte von Teilbildern **3** erfolgt. Die Distanz **D** der Spezialglasscheibe von der Monitoroberfläche und die Breite **B** bzw. Höhe **H** eines Teilbildes **3** beeinflussen direkt den maximal möglichen Betrachtungswinkel **W**, wogegen die Bildpunktauflösung des Monitors die maximal mögliche Entfernung des Betrachters bestimmt, bei dem noch eine stereoskopische Wahrnehmung möglich ist. Die extrem hohe Bildpunktfrequenz und die notwendige Maximalhelligkeit des Monitors wird zusätzlich dadurch verringert, daß vorzugsweise ein Monitor mit mehreren Strahlsystemen zum Einsatz kommt, wobei die Maximalhorizontalablenkung eines Strahlsystems bis höchstens zur Hälfte in den Horizontalablenkbereich des nächsten Strahlsystems reicht. Die Ablenkung der Strahlsysteme erfolgt dabei so, daß sich keine Strahlen kreuzen. Ein paralleles Betreiben mehrerer durchsichtiger Löcher **4** in der Spezialglasscheibe ist hier notwendig, wobei jedem Strahlsystem einer Spaltenposition der Löcher **4** zugeordnet wird. Die horizontale Bewegung eines Loches **4** erfolgt in diesem Fall nicht über die gesamte Fläche, sondern nur bis an die Grenze des nächsten Loches **4**.
Damit wird eine wesentliche Reduzierung der Bildpunktfrequenz des Monitors im Hintergrund erreicht, da in gleicher Zeiteinheit wesentlich weniger Teilbilder pro Loch **3** und damit Bildpunkte bereitzustellen sind. Das vorgenannte System besitzt als Verfahren den Vorteil, daß es auch mit einem herkömmlichen zweidimensionalen Monitorbetrieb arbeiten kann, indem die Spezialglasscheibe des Systems durchsichtig und der Monitor im Hintergrund in einen normalen Zeilenbetrieb umgeschalten wird oder indem bei normalem Betrieb die Teilbilder **4** im Hintergrund nur Segmente eines zweidimensionalen Gesamtbildes sind. Trotz der Verbesserung durch Anwendung mehrerer Strahlsysteme ist immer noch eine sehr hohe Bildpunktfrequenz zur Erzeugung eines flimmerfreien Bildes notwendig. In lokalen Systemen ist das relativ unproblematisch. Ist zwischen einem Aufnahmesystem und einem Wiedergabesystem ein Übertragungskanal mit begrenzter Bandbreite notwendig, so wird eine Bandbreitereduzierung dadurch erreicht, daß zu jedem einzelnen Loch **4** ein Bildpunktspeicher angelegt wird, der in der Lage ist alle Bildpunkte eines dazugehörigen Teilbildes **3** aufzunehmen. Da sich bei der Bewegung eines Loches **4** zur nächsten Position die Bildinformation im allgemeinen nicht wesentlich ändert, sondern nur geringfügig die Perspektive, reicht es aus, nur die zu ändernden Bildpunkte oder sogar Kommandos zur Bildmanipulation zu übertragen.
Das beschriebene Verfahren läßt sich analog dazu auch für die Aufnahme von stereoskopischen Kulissen verwenden. Dazu wird hinter einer oben beschriebenen Spezialglasscheibe **1** in einem definierten Abstand hinter dieser eine Bildaufnahmematrix **6** - vorzugsweise CCD-Sensor-verwendet, welche zur aktuellen Lochposition ein entsprechendes zweidimensionales Teilbild **3** einer räumlichen Kulisse vor der Spezialglasscheibe **1** aufnimmt.
Mit der entsprechenden Bandbreitereduzierung kann das Verfahren sowohl in der Computertechnik, als auch in der Fernsehtechnik angewandt werden.

Die Erfindung soll nachstehend an drei Ausführungsbeispielen näher erläutert werden. In der zugehörigen Zeichnung zeigen:
- **Figur 1:**: Vorrichtung zur Erzeugung stereoskopischer Darstellungen unter Verwendung eines Einstrahlspezialmonitors
- **Figur 2:**: Vorrichtung zur Erzeugung stereoskopischer Darstellungen unter Verwendung eines Mehrstrahlspezialmonitors
- **Figur 3:**: Aufnahmevorrichtung für stereoskopische Kulissen

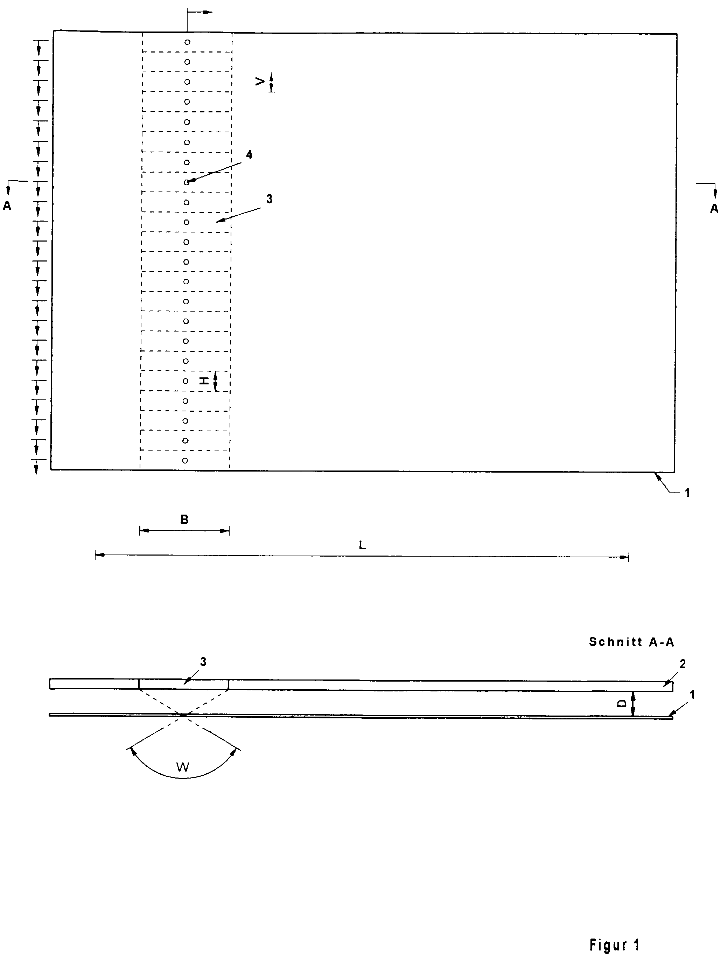

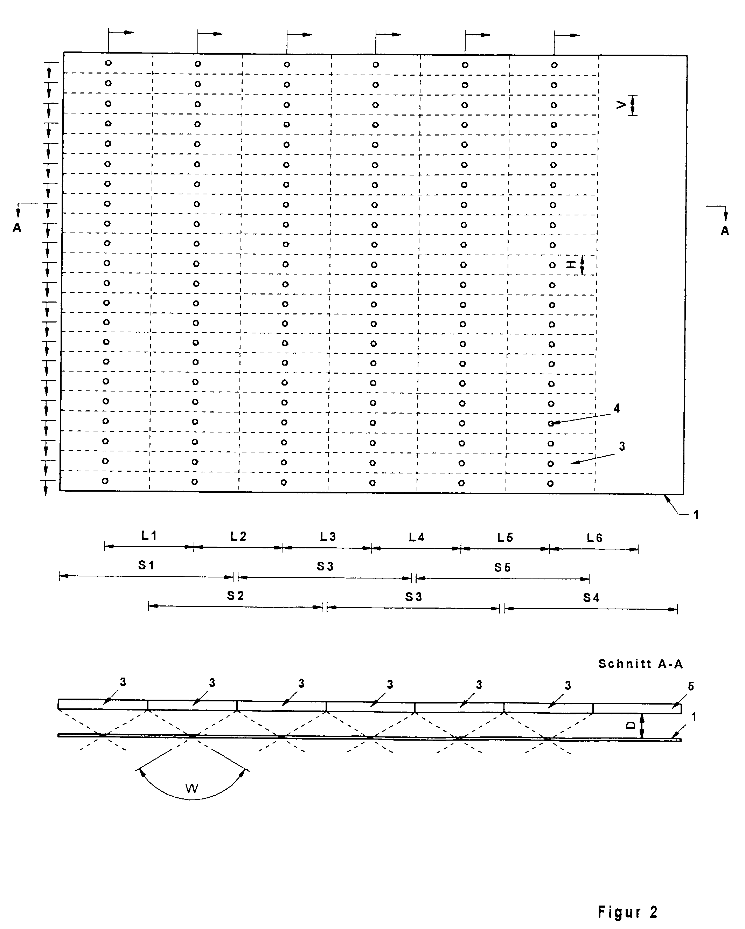

Bei der Vorrichtung zur Erzeugung von stereoskopischen Darstellungen nach Figur 1 befindet sich vor einem Einstrahlspezialmonitor **2** hoher Leuchtdichte und einer hohen Bildpunktmaximalfrequenz in einem Abstand **D** eine dünne Spezialglasscheibe **1**, mit schnell umschaltbaren Flüssigkristallelementen mit denen durch elektronische Ansteuerung Öffnungen in Form von Löchern **4** horizontal und vertikal über den Bereich **L** positioniert werden, wobei die Geschwindigkeit dieses Vorganges groß genug ist, um beim Betrachter aufgrund der Trägheit des Auges ein flimmerfreies Bild zu erzeugen. Während einer Position einer Spalte von Löchern **4** wird mittels des Spezialmonitors **2** ein Streifenbild, bestehend aus Teilbildern **3** der Breite **B** erzeugt, wobei sich der horizontale Zeilenlauf des Monitorstrahlsystems nur innerhalb der Breite **B** und nicht über die gesamte Monitorbreite bewegt. Ein einzelnes Teilbild **3** ist dabei die zweidimensionale Projektion einer räumlichen Kulisse aus der Perspektive der aktuellen Lochposition. Der maximal mögliche horizontale Betrachtungswinkel **W** wird durch die Breite **B** und die Distanz **D** bestimmt. Nach einem vollständigen horizontalen Durchlauf wird danach die vertikale Position der Löcher in den Grenzen von **V** verändert, so daß alle Koordinatenpunkte lückenlos einmal erreicht wurden. Die Bildpunktauflösung eines Teilbildes **3** ist so groß, daß bei maximaler Betrachtungsentfernung noch auf jedes Auge des Betrachters ein anderer Bildpunkt des Teilbildes **3** fällt.
Bei der Vorrichtung zur Erzeugung von stereoskopischen Darstellungen nach **Figur 2** wird anstelle des Einstrahlmonitors **2** in **Figur 1** ein Mehrstrahlspezialmonitor **5** mit sechs Strahlsystemen verwendet. Die Ansteuerung der Spezialglasscheibe **1** erfolgt dabei so, daß sich gleichzeitig sechs Spalten von Löchern **4** in den Grenzen **L1** bis **L6** bewegen, wobei zu jeder Spaltenposition ein Strahlsystem entsprechende Streifenbilder bestehend aus Teilbildem **3** bereitstellt. Der horizontale Auslenkungsbereich der Strahlsysteme bewegt sich dabei in den Grenzen **S1** bis **S6**, wobei sich die gleichzeitig erzeugten Streifenbilder der Strahlsysteme nicht überlappen. Durch den Parallelbetrieb der Strahlsysteme wird die Bildpunktfrequenz und die notwendige Maximalhelligkeit eines Strahlsystems wesentlich reduziert. Auch hier wird nach einem vollständigen horizontalen

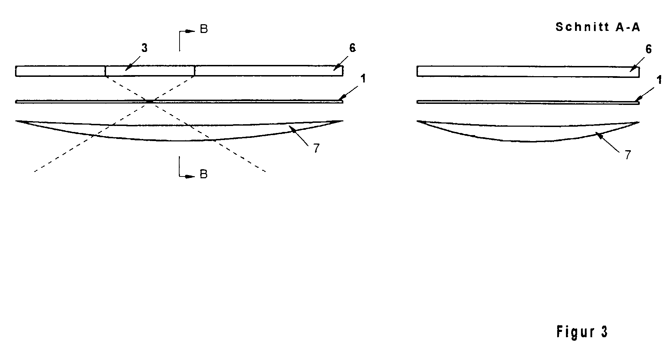

Durchlauf die vertikale Position der Löcher **4** in den Grenzen von **V** verändert, so daß alle Koordinatenpunkte lückenlos einmal erreicht wurden.
Bei der Aufnahmevorrichtung für stereoskopische Kulissen nach **Figur 3** werden mittels CCD-Matrix **6** durch eine Speziallinse **7** für eine jeweilige Lochposition der Spezialglasscheibe **1** entsprechende Teilbilder **3** aufgenommen. Diese werden in entsprechende elektrische Signale umgewandelt und können in einer Wiedergabevorrichtung in eine entsprechende stereoskopische Darstellung umgewandelt werden.

### Aufstellung verwendeter Bezugszeichen:

- 1: - Spezialglasscheibe mit schnell umschaltbaren Flüssigkristallelementen
- 2: - Einstrahlspezialmonitor
- 3: - Teilbild
- 4: - Loch
- 5: - 6-Strahl-Spezialmonitor
- 6: - CCD-Matrix
- 7: - Speziallinse
- B: - Teilbildbreite
- D: - Distanz Monitor-Spezialglasscheibe
- L, L1..L6: - horizontale Positionierbereiche der Löcher
- V: vertikaler Positionierbereich eines Loches
- S1..S6: - horizontaler Maximalauslenkungsbereich der Strahlsysteme 1..6
- W: - maximaler Betrachtungswinkel

## Patentansprüche

1. Verfahren zur Erzeugung stereoskopischer Darstellungen, ohne Verwendung mechanisch bewegter Teile, das einen großen Betrachtungsbereich ohne jegliche Hilfsmittel wie Polarisationsbrillen gestattet, wobei in einer lichtundurchlässigen Platte transparente Öffnungen einzeln oder in Gruppen sequentiell über der gesamten Betrachtungsfläche erzeugt und auf einer sich dahinter befindlichen bildwiedergebenden Einheit Bildinformationen bereitgestellt werden, dadurch gekennzeichnet,
daß für eine vollständig räumliche Wahrnehmung aus unterschiedlichen Betrachtungspositionen als transparente Öffnungen Löcher **(4)** eingesetzt und Bildinformationen auf der bildwiedergebenden Einheit bereitgestellt werden, die sich aus - jeweils zu den Lochpositionen gehörenden -zweidimensionalen Teilbildern **(3)** zusammensetzen, welche die zweidimensionalen Projektionen einer räumlichen Kulisse aus den Perspektiven der Lochpositionen sind, die einzeln nicht den gesamten bildwiedergebenden Bereich einnehmen, und die eine jeweilige Höhenausdehnung **(H)** und Breitenausdehnung **(B)** aufweisen, die so groß ist, daß bei einem vorgegebenem maximalen Betrachtungswinkel **(W)** ein Betrachter bei unterschiedlichen Betrachtungspositionen sowohl horizontal als auch vertikal durch ein derartiges Loch **(4)** nur die zugehörigen Bildinformationen dieses Teilbildes als sehr kleines Detail wahrnimmt.

2. Verfahren zur Erzeugung stereoskopischer Darstellungen nach Anspruch 1, dadurch gekennzeichnet,
daß dieses reversibel für die Aufnahme von räumlichen Kulissen derart angewandt wird, indem anstelle der bildwiedergebenden Einheit ein Bildaufnahmesensor **(6)** die den Lochpositionen zugehörigen Bildinformationen in Form von Teilbildern **(3)** welche sich aus den zweidimensionalen Projektionen einer räumlichen Kulisse auf der Bildsensorfläche durch die zugehörigen Löcher **(6)** der lichtundurchlässigen Platte ergeben, aufnimmt.

## Claims

1. Procedure for the production of stereoscopic displays without mechanically mobile parts, which permit a wide viewing area without the aid of polarising spectacles for example, so that on a lightproof plate transparent openings are produced individually or in sequential groups over the whole viewing surface and where display information is provided, characterised by a repeat display unit positioned behind it. It is inserted as transparent hole openings for complete space perception from various viewing positions (4) prepared for viewing information on the repeat display unit which is composed of two dimensional fields (3) - in each case belonging to the hole positions - which are the two dimensional projectors of a spatial backdrop from the perspective of the hole openings, which individually do not take up the whole repeat display area and which demonstrate a particular high (H) and wide (B) expansion which is so large that from a predetermined maximum viewing angle (W) a viewer only perceives at different viewing positions, both horizontal and vertical, tiny details through such a hole (4) the display information belonging to this field.

2. Procedure for production of stereoscopic displays according to claim 1 characterised by the fact that it is used reversibly in such a way for the spatial backdrop shot while instead of the repeat display unit image sensor (6) receives the hole opening belonging to the display information in the form of fields (3) which arise from the two dimensional spatial backdrop projections on the image sensor surface through the holes (6) belonging to the opaque plates.

## Revendications

1. Procédé pour la réalisation de représentations stéréoscopiques sans recours à des pièces mécaniques, procédé qui permet une grande plage d'observations sans moyens auxiliaires tels que des lunettes de polarisation, des ouvertures transparentes étant ménagées dans une plaque opaque, séparées ou séquentiellement en groupes sur toute la surface d'observation et sur une unité de reproduction d'image se trouvant derrière, des informations d'images étant mises à disposition, caractérisé en ce que
pour une perception spatiale complète depuis les diverses positions d'observation, on utilise comme ouvertures transparentes des trous (4) et des informations d'images étant mises à disposition sur une unité de reproduction d'image, informations qui se composent d'images partielles (3) en deux dimensions correspondant respectivement aux positions de trous, images partielles qui sont les projections en deux dimensions d'une coulisse spatiale depuis les perspectives des positions de trous, qui ne prennent pas l'ensemble de la zone reproductrice d'image et qui présentent une extension en hauteur (h) et une extension en largeur (B) respective qui est suffisamment grande que dans un angle d'observation maximale prédéterminé (W), un observateur perçoit à différentes positions d'observation aussi bien à l'horizontal qu'à la verticale par un trou de ce type (4) uniquement les informations d'image respectives de cette image partielle en très petit détail.

2. Procédé pour la réalisation de représentations stéréoscopiques selon la revendication 1, caractérisé en ce que
celui-ci est appliqué de manière réversible pour l'enregistrement de coulisses spatiales dans le fait qu'à la place de l'unité de reproduction d'image, un capteur de prise d'image (8) prend les informations d'images correspondant aux positions de trous sous forme d'images partielles (3) qui résultent des projections en deux dimensions d'une coulisse spatiale sur la surface du capteur d'image par les trous respectifs (66) de la plaque opaque.
